# EUROPÄISCHE PATENTSCHRIFT

(11) **EP 3 227 543 B1**
(45) Veröffentlichungstag und Bekanntmachung des Hinweises auf die Patenterteilung: **26.06.2019**
(21) Anmeldenummer: 15804511.2
(22) Anmeldetag: 03.12.2015
(51) Int. Cl.: F02D 41/00, F02D 19/02, F02D 19/06, F02D 19/08, F02D 19/10

(54) **EINSPRITZUNGSSTEUERGERÄT UND VERFAHREN ZUM ANSTEUERN EINER KRAFTSTOFFEINSPRITZUNG EINES DIESELMOTORS IM MISCHBETRIEB MIT EINEM DIESEL-GAS-KRAFTSTOFFGEMISCH**
INJECTION CONTROL UNIT AND METHOD FOR CONTROLLING A FUEL INJECTION MEANS OF A DIESEL ENGINE DURING MIXED OPERATION WITH A DIESEL-GAS FUEL MIXTURE
DISPOSITIF DE COMMANDE D'INJECTION ET PROCÉDÉ POUR COMMANDER L'INJECTION DE CARBURANT DANS UN MOTEUR DIESEL EN FONCTIONNEMENT MIXTE AVEC UN MÉLANGE DE CARBURANT À BASE DE DIESEL ET DE GAZ

(30) Priorität: 03.12.2014 LU 92605
(43) Veröffentlichungstag der Anmeldung: 11.10.2017
(73) Patentinhaber: SC-concepts S.A., 9911 Troisvierges (LU)
(72) Erfinder: SCHUMACHER, Christian, 9990 Weiswampach (LU); FOGEN, René, 4780 Sankt Vith (BE)
(74) Vertreter: Pronovem
(86) Internationale Anmeldenummer: PCT/EP2015/078540
(87) Internationale Veröffentlichungsnummer: WO 2016/091716

(56) Entgegenhaltungen:
- WO-A1-2009/106849
- WO-A1-2010/103288
- GB-A- 2 447 046
- GB-A- 2 468 539
- US-A1- 2011 288 745
- US-A1- 2012 085 326

## Beschreibung

### Technisches Gebiet

Die vorliegende Erfindung betrifft allgemein ein Einspritzungssteuergerät beziehungsweise ein Verfahren zum Ansteuern einer Kraftstoffeinspritzung eines Dieselmotors. Insbesondere betrifft die Erfindung ein Einspritzungssteuergerät, welches in ein dieselbetriebenes Fahrzeug nachgerüstet werden kann und die vorhandene Kraftstoffeinspritzungsvorrichtung so ergänzt, dass der Dieselmotor im Mischbetrieb mit einem Diesel-Gas-Kraftstoffgemisch betrieben werden kann.

### Stand der Technik

Angesichts des kontinuierlich steigenden Rohölpreises wird im Automobilbereich zunehmend nach alternativen Antriebskonzepten gesucht, welche auf erdölbasierte Kraftstoffe ganz oder teilweise verzichten. Aus dem Stand der Technik gehen noch keine Antriebsaggregate hervor, welche in großer Stückzahl hergestellt werden können und welche eine dem Diesel- oder Ottomotor ähnliche Kombination aus Komfort, Zuverlässigkeit und Kosten bieten.

Eine interessante Möglichkeit zur gleichzeitigen Kosten- und Abgasreduzierung bieten vor allem Dieselmotoren, welche zum Mischbetrieb mit Gas ausgerüstet sind. Solche Antriebsaggregate sind vorteilhaft, da auf bestehende, verbrauchsoptimierte Dieselmotoren zurückgegriffen und mit Gas ein zweiter, meist preiswerterer Kraftstoff verwendet werden kann. Des Weiteren können auch ältere Fahrzeuge mit Systemen für den Mischbetrieb ausgestattet werden, wodurch die diese Fahrzeuge älterer Bauart und Emissionseinstufung, ohne kostentreibenden Aufwand in höhere (sauberere) Emissionsstufen angehoben werden können. Die meisten auf dem Markt verfügbaren Einspritzsysteme, welche einen Diesel-Gas-Mischbetrieb ermöglichen, betreiben den Dieselmotor auf Seiten der Dieseleinspritzung mit seinen ursprünglichen Parametern. Daraus folgt, dass es im Mischbetrieb zwangsläufig zu einer Drehmoment- beziehungsweise Leistungserhöhung des Dieselmotors im mittleren und oberen Drehzahlbereich kommt, da zusätzlich zum Dieselkraftstoff eine bestimmte Menge an Gaskraftstoff eingespritzt wird. Diese Leistungserhöhung führt sowohl zu einer höheren thermischen Belastung des Dieselmotors als auch zum Erlöschen der Betriebserlaubnis des Fahrzeugs.

Aus dem Stand der Technik gehen Einspritzungsvorrichtungen hervor, welche den Mischbetrieb eines Dieselmotors mit einem Gas-Diesel-Gemisch ermöglichen. DE 20 2012 100 107 U1 offenbart eine solche Nachrüstungsvorrichtung. Die Vorrichtung umfasst eine Diesel-ECU sowie eine Gas-ECU und, zusätzlich zu den bestehenden Diesel-Injektoren, jeweils einen Gas-Injektor pro Zylinder. Die Gas-ECU überwacht die Ansteuersignale der Diesel-Injektoren und schaltet die Ansteuersignale aus der Diesel-ECU nach einem vorgegebenen Kennlinienfeld auf eine Ersatzimpedanz um, um während der Umschaltzeit nach einem Kennfeld die jeweiligen Gas-Injektoren zur Einspritzung des Gaskraftstoffs anzusteuern. Daraus folgt, dass der Gaskraftstoff den Dieselkraftstoff zum Teil ersetzt und somit zu einer Reduzierung des teureren Dieselkraftstoffs führt.

CA 2 626 995 A1 offenbart eine Nachrüstungsvorrichtung und ein Verfahren einer Kraftstoffeinspritzungsteuerung einer Direkteinspritzung von gasförmigem Kraftstoff eines Dieselverbrennungsmotors. Das Einspritzen von Gaskraftstoff wird durch Daten der Motoreinheit von einer Kontrolleinheit über Korrekturfaktoren gesteuert. Die Korrekturfaktoren werden in der Kontrolleinheit mit vordefinierten, abgespeicherten Parametern, Algorithmen, Kennlinien und Nachschlagtabellen zusammen mit den Daten der Motoreinheit ermittelt. Zu diesen Daten gehören zum Beispiel Motorgeschwindigkeit, Gesamtmenge an Kraftstoff genauso wie Motorstatus, verschiedene Druckwerte und Temperaturen

WO 2011/130832 A1 offenbart ein Verfahren zum Steuern einer Direkteinspritzung eines mit Gaskraftstoff betriebenen Verbrennungsmotors, um eine Effizienzverbesserung eines SCR Wandlers zur Reduktion der NOx Emissionen in dem Abgas zu erreichen, durch Kontrollieren der Temperatur der Abgase beim Austreten der Verbrennungskammer im Vergleich zu einer vordefinierten Temperatur und im gegebenen Fall die Temperatur der Abgase durch ein Nacheinspritzen von Kraftstoff um den oberen Totpunkt zu erhöhen

WO2013/000030 A1 offenbart ein Motorsteuerungssystem zum Steuern des Zeitpunkts der Einspritzung des Gaskraftstoffes in Bezug auf gemessene NOx Emissionen und Lambda Werte in dem Abgas, im Vergleich zu geeigneten Funktionen, Nachschlagtabellen und Kennlinien.

US 2012/085326 A1 beschreibt, dass die Dauer "Einspritzzeit Diesel" und die Dauer "Einspritzzeit Gas" angepasst werden kann. Das "timing" der Einspritzung (d.h. der Zeitpunkt wann die Einspritzung erfolgt) kann jedoch in keinster Weise beeinflusst werden. Dies ist klar und deutlich aus der Schaltung heraus zu erkennen.

In der GB 2 468 539 A werden Ersatzlasten und Transistorsteuerungen benutzt um den Motor im Mischbetrieb zu regeln. Der jeweilige Original-Dieselinjektor wird als Ersatzlast benutzt d.h. die Injektoren, die gerade nicht im Arbeitstakt sind, werden als Ersatzlast für den gerade im Arbeitstakt befindlichen Injektor eingesetzt. Es handelt sich somit um eine zylinderselektive Einspritzung des Gases. Weder die Einspritzlänge noch der Einspritzzeitpunkt und Kurbelwellenverstellung (Spritzbeginn) können eigenständig und autonom gestaltet bekommt.

WO 2010/103288 A1 befasst sich größtenteils mit der Reduzierung des Common Rail Drucks. Diese Reduzierung des Einspritzdrucks wirkt sich jedoch negativ auf den Wirkungsgrad, das Zerstäubungsbild, die Emissionen und den Verbrauch (somit CO2) des Motors aus.

WO 2009/106849 A1 beschreibt einen umgebauten Dieselmotor der mit Erdgas betrieben wird, also nicht einen DUAL FUEL Motor, sprich Diesel und Erdgas, die simultan im Brennraum entzündet werden.

### Aufgabe der Erfindung

Es ist eine Aufgabe der Erfindung, ein nachrüstbares Einspritzungssteuergerät für den Mischbetrieb eines Dieselmotors mit Gaskraftstoff bereitzustellen, welches eine thermische Überbeanspruchung des Dieselmotors im Mischbetrieb verhindert.

### Allgemeine Beschreibung der Erfindung

Diese Aufgabe wird erfindungsgemäß gelöst durch ein Einspritzungssteuergerät gemäss Anspruch 1 und ein entsprechendes Verfahren nach Anspruch 12.

Gemäß der Erfindung umfasst ein Einspritzungssteuergerät zum Steuern einer Kraftstoffeinspritzung eines Dieselmotors für den Mischbetrieb mit Gas, eine, die Kraftstoffeinspritzungsvorrichtung simulierende, elektrische Ersatzlast sowie eine Prozessoreinrichtung. Die Ersatzlast ist auf Basis eines elektrischen Widerstands und/oder elektrischer Induktivität aufgebaut und an einen, ein Einspritzungssteuersignal ausgebenden, Ausgangsport einer Motorsteuerungseinheit anschließbar. Das Einspritzungssteuergerät ist über den Aufbau des Schaltbildes fähig, eigenständig sowohl den Beginn der Dieseleinspritzungen als deren Länge und Anzahl, ohne das Einspritzungssteuersignals der originalen Fahrzeug ECU abwarten zu müssen, zu generieren. Die Prozessoreinrichtung umfasst mindestens die folgenden Anschlüsse:
- einen Eingangsport zum Empfangen des Einspritzungssteuersignals, welches gemäß von der Motorsteuerungseinheit bestimmten Einspritzungsparametern geformt ist,
- einen ersten Ausgangsport zum Ausgeben eines gegebenenfalls von der Prozessoreinrichtung gegenüber dem Einspritzungssteuersignal modifizierten Einspritzungssteuersignal (zur Unterscheidung von dem von der Motorsteuerungseinheit ausgegebenen Einspritzungssteuersignal wird im Folgenden das von der Prozessoreinheit modifizierte Einspritzungssteuersignal als "Dieseleinspritzungssteuersignal" bezeichnet); und
- einen zweiten Ausgangsport zum Ausgeben eines Gaseinspritzungssteuersignals zum Steuern einer Gaseinspritzungsvorrichtung.

Die Prozessoreinrichtung ist derart konfiguriert, dass sie das Dieseleinspritzungssteuersignal und das Gaseinspritzungssteuersignal sowie den Beginn, die Länge und/oder die Anzahl der Dieseleinspritzungen und der Gaseinspritzungen unabhängig von dem Einspritzungssteuersignal erzeugt, wobei die Prozessoreinrichtung das Dieseleinspritzungssteuersignal und das Gaseinspritzungssteuersignal aufeinander abstimmt, und dabei das Dieseleinspritzungssteuersignal gegenüber dem Einspritzungssteuersignal zumindest dann modifiziert, wenn am zweiten Ausgangsport das Gaseinspritzungssteuersignal zum Betreiben des Dieselmotors im Mischbetrieb mit Gaskraftstoff ausgegeben wird. Infolgedessen kann der Einspritzbeginn, die Voreinspritzung, die Haupteinspritzung und die Nacheinspritzung frei gewählt und je nach Anwendung gesteuert werden, somit in deren Länge definiert werden, aber auch wahlweise frei wählbare Einspritzungen aus diesen zitierten ausgegebenen Einspritzungen komplett oder teilweise ausgeblendet werden, um den Dieselmotor im Mischbetrieb emissionsgerecht zu betreiben. Als Beispiel kann bei einem Dieselmotor mit Common-Rail Einspritzung der Einspritzbeginn der Einspritzgruppe (Voreinspritzung, Haupteinspritzung und Nacheinspritzung) in Richtung "spät" verschoben werden, wodurch die NOx Emissionen im Abgas reduziert werden. Zusätzlich lässt sich durch die Verschiebung der Einspritzgruppe in Richtung "später Spritzbeginn auf Kurbelwellenwinkel betrachtet" der Druckanstieg im Brennraum besser kontrollieren, weshalb für den Motor im Mischbetrieb gefährliche Druckspitzen im Brennraum vermieden werden können. Eine solche Verschiebung ist bei bestehenden Systemen nicht möglich. Ebenfalls ist es möglich, eine zusätzliche Nacheinspritzung zu generieren, um die Abgastemperatur zu erhöhen und eine Reduzierung der Kohlenwasserstoffe durch effizientes Wandeln in einem Katalysator zu erreichen, beziehungsweise die autonome Ansteuerung des "siebten Injektors - AHI" ebenfalls ermöglicht wird mit der Steuereinheit

Die elektrische Ersatzlast entkoppelt die Motorsteuerungseinheit von dem Diesel-Injektor oder den Diesel-Injektoren. Je nach Anwendung kann die Prozessoreinrichtung das Dieseleinspritzungssteuersignal gegenüber dem Einspritzungssteuersignal unterschiedlich modifizieren. Somit kann das gleiche Einspritzungssteuergerät durch Anpassung von der Prozessoreinrichtung für unterschiedliche Gaskraftstoffe, wie beispielsweise CNG (Compressed Natural Gas) oder LNG (Liquified Natural Gas) verwendet werden.

Diese Entkopplung der Injektoren von der Motorsteuerungseinheit erlaubt es der Prozessoreinrichtung, Signale zur Steuerung von Einspritzung von Diesel genauso wie von Gas zu den Injektoren vorab zu berechnen, ohne dass dabei die angeforderte Einspritzausgabe des originalen Motorsteuergerätes zum Dieselinjektor hin abgewartet werden muss, oder notwendig wäre. Die Ersatzlasten, bestehend aus elektrischen Widerständen und/oder elektrischer Induktivität, erlaubt es, die Signale der Steuerung von Einspritzung der Motorsteuerungseinheit bei Betrieb des Motors aufzunehmen und abzuleiten, ohne dass die Motorsteuerungseinheit eine Fehlfunktion erhält. Weiterhin können diese Einspritzungssteuersignale von der Prozessoreinrichtung eingelesen werden.

Nach einer bevorzugten Ausgestaltung der Erfindung ist die Prozessoreinrichtung derart konfiguriert, dass sie das Dieseleinspritzungssteuersignal und das Gaseinspritzungssteuersignal so aufeinander abstimmt, dass eine vorgegebene Nennleistung und Nenndrehmoment des Dieselmotors im Mischbetrieb mit Gaskraftstoff nicht überschritten wird. Dies wird durch ein gegenüber dem Einspritzungssteuersignal modifiziertes Dieseleinspritzungssteuersignal erreicht. Demzufolge kann das Dieseleinspritzungssteuersignal und das Gaseinspritzungssteuersignal über den gesamten Drehzahl- und Lastbereich seitens Kennfeldgestaltung frei adaptiert werden, wobei die daraus resultierenden Einspritzausgabezeiten jeweils über CAN-Bus zwischen den beiden Steuereinheiten kommuniziert, dementsprechend erlaubt den Motor seitens thermischer Belastung als ebenfalls der Druckverlauf Kurve der innermotorischen Brennlage so zu gestalten, dass der Motor keine Überbelastung erlangt und seine Laufleistungserwartung dementsprechend nicht reduziert wird. Momentenaufbau und Regelung bleiben der Serie im Diesel entsprechend im Mischbetrieb somit 1 zu 1 erhalten.

Das Einspritzungssteuergerät weist bevorzugt mindestens eine Schnittstelle zum Einlesen eines Parametersatzes auf, wobei der Parametersatz einen oder mehrere der folgenden Parameter umfasst:
- Drehzahl,
- Sauerstoffanteil/Restsauerstoff Abgas (Lambda),
- Fahrpedalposition,
- Motorlast (Motor CAN)
- Angeforderte Motorlast (Motor CAN)
- Ausgegebene Motorlast (Motor CAN)
- Motortemperatur,
- Ansauglufttemperatur,
- Ladedruck,
- Wassertemperatur,
- Kraftstofftemperatur sowohl auf Diesel dann auch Gasseite,
- Gasdrucksensor,
- Zusätzlicher Kühlmittelkreislauf Sensor (beispielweise LNG Heizkreislauf),
- EGR Rate,
- AHI Rate und Ansteuerung,
- SCR Ansteuerung und Überwachung,
- NOx Sensoren,
- Luftmasse,
- Dieselkraftstoffdruck,
- Abgastemperatur und
- Tankdruck, bzw. Tankinhalt.
- Die Basiskennfelder des Originalmotors können mit der Steuerungseinheit genau erfasst und nachgebildet werden, da durch das Abgreifen des Kurbelwellensensorsignals sowie des Nockenwellensensorsignals die genaue Definition des Einspritzverlaufs der Dieselinjektoren und die Abbildung der Einspritzzeiten aus der Original ECU ermöglicht werden
- Das Abgreifen von Kurbelwellensensorsignal als ebenfalls des Nockenwellensensorsignal, zur genauen Definition des Einspritzverlaufs der Dieselinjektoren und Abbildung der Einspritzzeiten aus der Original ECU, was es erlaubt die Basiskennfelder des Originalmotors genau nachzubilden und zu erfassen
- Die Lasterkennungerkennung der effektiven Motorlast des Motors berechnet aus Einspritzzeit in Ko-Relation mit dem Raildruck /anliegenden Einspritzbetriebsdrucksdes Motors,
- Die Berechnung des Phasenverzugs (zeitlichen Verzug Gaseinblasung in's Saugrohr) um Totzeiten über Saugrohrvolumen bis in den Zylinder seitens der elektronischen Regelung auf Dieselseite zu Gasseite synchron versetzen zu können, um insbesondere ein besseres Ansprechverhalten des Motors und eine gezieltere Schubabschaltung dargestellt zu bekommen sehen, die destoweiter den Ausstoss von Kohlenwasserstoff (HC) aus der simultanen Verbrennung von Diesel und Erdgas hervorgehend, stark verringern lässt
- Die Betrachtung des zeitlichen Verlaufs/Verhaltens der Schubabschaltung auf Dieselseite über die Motorelektronik,
- Modellbasierte Korrektur des Energiegehaltes im Erdgas welches dem Motor im jeweiligen Betriebspunkt zugeführt wird, ermittelt über die Grössen a) Umgebungstemperatur, b) Tankdruck im CNG/LNG Tank, c) Einspritzzeit Gasseite/Entnahmemenge und d) Gastemperatur/Delta T dass im Wärmetauscher Kühlwasser/Gasdurchströmung des Gasdruckreglers gemessen wird

Mindestens eine Schnittstelle des Einspritzungssteuergeräts ist bevorzugt als CAN-Bus (Controlled Area Network) Schnittstelle ausgeführt, welche so ausgeführt sein kann, dass sie über das OBDI/II, WWH OBD, (On Board Diagnose Protokoll) oder Fahrzeug-Can-Netzwerk, kommuniziert.

Die Prozessoreinheit ist bevorzugt so konfiguriert, dass der eingelesene Parametersatz zur Erzeugung des Dieseleinspritzungssteuersignals und des Gaseinspritzungssteuersignals mitberücksichtigt wird. Der Parametersatz kann zusätzlich zum Einspritzungssteuersignal eingelesen werden, um die Verbrennung des Gas-Diesel-Luft-Gemischs zu optimieren. Bevorzugt wird Lambda zur Verbrennungsoptimierung herangezogen. Des Weiteren kann die Prozessoreinheit einen Speicher umfassen, auf dem ein oder mehrere Kennlinienfeld/-er für die einzuspritzende Gasmenge und die einzuspritzende Dieselmenge hinterlegt ist/sind, auf das die Prozessoreinheit zur Erzeugung des Dieseleinspritzungssteuersignals und des Gaseinspritzungssteuersignals zurückgreifen kann.

Häufig werden mehrere Parameter des Parametersatzes oder zusätzliche Parameter bereits von der Motorsteuerungseinheit zum Erzeugen des Einspritzungssteuersignals ermittelt, weshalb auf das Anbringen zusätzlicher Sensoren am Dieselmotor verzichtet werden kann. Die mindestens eine Schnittstelle des Einspritzungssteuergeräts ist bevorzugt mit einer Schnittstelle der Motorsteuerungseinheit wirkverbunden um die Parameter einzulesen. Alternativ oder zusätzlich kann das Einspritzungssteuergerät mindestens einen Sensor (z.B. eine Lambdasonde, welche in der Abgasanlage des Fahrzeugs angebracht wird) umfassen, welcher zur Ermittlung eines oder mehreren Parameters/-er des Parametersatzes verwendet wird. Der mindestens eine Sensor weist bevorzugt mindestens eine Sensorschnittstelle auf, welche mit der mindestens einen Schnittstelle des Einspritzungssteuergeräts wirkverbunden ist. So können zusätzliche Parameter wie Ladedruck, Niedergasdruck, Gastemperatur an einem Gas-Filterelement ermittelt werden, welches Sensoren integriert hat.

Nach einer bevorzugten Ausgestaltung der Erfindung ist das Einspritzungssteuersignal und das Dieseleinspritzungssteuersignal unter anderem gemäß einer Dauer der Haupteinspritzung geformt, welche nachfolgend als Haupteinspritzungsdauer für das Einspritzungssteuersignal und als Dieselhaupteinspritzungsdauer für das Dieseleinspritzungssteuersignal bezeichnet wird. Im Mischbetrieb modifiziert die Prozessoreinrichtung das Dieseleinspritzungssteuersignal gegenüber dem Einspritzungssteuersignal dahingehend, dass die Dieselhaupteinspritzungsdauer gegenüber der Haupteinspritzungsdauer verkürzt ist. Demnach wird im Mischbetrieb eine verringerte Menge an Dieselkraftstoff eingespritzt.

Bevorzugt ist das Einspritzungssteuersignal und das Dieseleinspritzungssteuersignal unter anderem gemäß eines Beginns der Einspritzung geformt, welcher nachfolgend als Einspritzungsbeginn für das Einspritzungssteuersignal und als Dieseleinspritzbeginn für das Dieseleinspritzungssteuersignal bezeichnet wird. Im Mischbetrieb modifiziert die Prozessoreinrichtung das Dieseleinspritzungssteuersignal gegenüber dem Einspritzungssteuersignal dahingehend, dass der Dieseleinspritzbeginn gegenüber dem Einspritzbeginn zeitlich verzögert ist. Vom Fachmann wird diese Art der zeitlich verzögerten Einspritzung auch als eine Verschiebung der Einspritzung in Richtung "spät" verstanden.

Alternativ modifiziert die Prozessoreinheit das Dieseleinspritzungssteuersignal gegenüber dem Einspritzungssteuersignal so, dass die Voreinspritzung nicht ausgegeben wird. Somit kann das homogene Luft/Gasgemisch durch eine nach "spät" verstellte Haupteinspritzung zum optimalen Zeitpunkt gezündet werden.

Das Gaseinspritzungssteuersignal ist gemäß einem Gaseinspritzungsparameter geformt. Der Gaseinspritzungsparameter welcher bevorzugt dem Gasmassenstrom entspricht, ist drehzahl- und nennlastabhängig. Je nach Anwendung gehen Korrekturgrößen, wie Lambda, Gastemperatur, Ladedruck, Gasdruck, Batteriespannung, Motortemperatur, mit in die Ermittlung des Gasmassenstroms ein.

Nach einer bevorzugten Ausgestaltung der Erfindung umfasst das Einspritzungssteuergerät mindestens einen Injektor zum Einspritzen des Gaskraftstoffs, wobei der Injektor eine Injektor Schnittstelle zum Empfangen des Gaseinspritzungssteuersignals aufweist. Der Gas-Injektor ist so positioniert, dass sich der Gaskraftstoff mit der vom Dieselmotor angesaugten Frischluft so vermischt, dass ein homogenes Gemisch im Brennraum des jeweiligen Zylinders des Dieselmotors, unmittelbar vor der Verbrennung, vorliegt. Gemäß einer ersten Variante werden bevorzugt zwei und mehr Injektoren im Saugrohr oder in einer Vormischvorrichtung des Dieselmotors angeordnet. Dies ermöglicht eine genaue elektrische Ansteuerung und Gasdosierung über ein erstes Ventil mit geringerem Massendurchsatz bei niedriger Motorlast und dennoch eine ausreichende Gasdosierung über das zweite Ventil mit größerem Massedurchfluss bei hoher Motorlast. Vorzugsweise sind lange Vormischstrecken einsetzbar, ein Pre-mix Verfahren das dem Gas und der Ansaugluft die notwendige Zeit zur homogenen Durchmischung gestattet, um die anschliessende Verbrennung ebenfalls homogen gestaltet zu sehen und zu vermeiden spezifische Schadstoffgruppen zu erhöhen, die anschliessend abgastechnisch wieder nachbehandelt werden müssen

Die Berechnung des Phasenverzugs (zeitlichen Verzug Gaseinblasung in's Saugrohr) erlaubt es Totzeiten über Saugrohrvolumen bis in den Zylinder seitens der elektronischen Regelung auf Dieselseite zu Gasseite synchron versetzen zu können. Dadurch wird ein besseres Ansprechverhalten des Motors und eine gezieltere Schubabschaltung erreicht, so dass der Ausstoss von Kohlenwasserstoff (HC) aus der simultanen Verbrennung von Diesel und Erdgas hervorgehend, stark verringern werden kann.

Das Einspritzungssteuergerät ist zum Erkennen der Dieselpartikelfilterregeneration ausgelegt. Erkennt das Einspritzungssteuergerät die Dieselpartikelfilterregeneration, betreibt das Einspritzungssteuergerät den Dieselmotor im reinen Dieselbetrieb (ohne Hinzuführen von Gaskraftstoff). Die Prozessoreinheit gibt demzufolge kein Gaseinspritzungssteuersignal aus, weshalb das Dieseleinspritzungssteuersignal dem Einspritzungssteuersignal entspricht.

Nach einer bevorzugten Ausgestaltung der Erfindung ist das Einspritzungssteuergerät so ausgelegt, dass es je nach Fahrzeugtyp die Dieselpartikelfilterregeneration nach mindestens einem der folgenden drei Modi erkennt.

Im ersten Modus liest das Einspritzungssteuergerät die Temperatur des Abgasstrangs, über die wenigstens eine Schnittstelle des Einspritzungssteuergeräts ein. In diesem Fall ist die Schnittstelle des Einspritzungssteuergeräts bevorzugt mit einer CAN-Bus Schnittstelle oder einer OBDI/II-Schnittstelle der Motorsteuerungseinheit wirkverbunden.

Im zweiten Modus ist die wenigstens eine Schnittstelle des Einspritzungssteuergeräts bevorzugt mit der Schnittstelle eines Temperaturfühlers wirkverbunden. Der Temperaturfühler ist bevorzugt vor dem Dieselpartikelfilter angeordnet.

Im dritten Modus tastet das Einspritzungssteuergerät das Einspritzungssteuersignal ab, wobei es die für die Dieselpartikelfilterregeneration benötigte Nacheinspritzung erkennt.

Des Weiteren ist das Einspritzungssteuergerät bevorzugt so ausgelegt, dass ein Fahrprofil erkannt wird. Die Prozessoreinrichtung kann dann das Dieseleinspritzungssteuersignal gemäß dem erkannten Fahrprofil modifizieren. Die das Fahrprofil betreffenden Informationen können über eine Schnittstelle (CAN-Bus) des Einspritzungssteuergeräts ausgegeben werden. Des Weiteren kann das Einspritzungssteuergerät dazu eingerichtet sein, Statistiken auf Basis des erkannten Fahrerprofils zu erstellen. Die Statistiken können unter anderem den Verbrauch an Dieselkraftstoff und/oder Gaskraftstoff betreffen. Schließlich ist das Einspritzungssteuergerät so eingerichtet sein, dass "Logging" Daten auf dem Einspritzungssteuergerät hinterlegt sind, die es jederzeit erlauben, hinterlegte Abläufe und Parameter im Dieselbetrieb als auch Mischbetrieb zu kontrollieren und zwecks Auswertungen zu benutzen.

Die Kraftstoffeinspritzungsvorrichtung eines Dieselmotors für den Mischbetrieb mit Gaskraftstoff wird gemäß eines Verfahrens gesteuert, das die folgenden Schritte umfasst:
- Simulieren einer Kraftstoffeinspritzungsvorrichtung mit einer elektrischen Ersatzlast,
- Empfangen eines Einspritzungssteuersignals durch eine Prozessoreinheit, wobei das Einspritzungssteuersignal von einer Motorsteuerungseinheit gemäß bestimmten Einspritzungsparametern geformt ist,
- unabhängig von einem Einspritzungssteuersignal, Erzeugen eines Dieseleinspritzungssteuersignals und eines Gaseinspritzungssteuersignals, wobei das Dieseleinspritzungssteuersignal gegenüber dem Einspritzungssteuersignal modifiziert ist und das erzeugte Dieseleinspritzungssteuersignal und das erzeugte Gaseinspritzungssteuersignal aufeinander abgestimmt sind,
- Anlegen des frei zu definierenden und den Zeitpunkt frei wählbaren Dieseleinspritzungssteuersignals an einen Diesel-Injektor gleich welcher Bauart und Ansteuerungsform sprich 12V Spule, 42V Spule, Piezo, usw., und
- Anlegen des Gaseinspritzungssteuersignals an einen Gas-Injektor.

Bevorzugt sind das Dieseleinspritzungssteuersignal und das Gaseinspritzungssteuersignal so aufeinander abgestimmt, dass eine vorgegebene Nennleistung und Nenndrehmoment des Dieselmotors im Mischbetrieb mit Gaskraftstoff nicht überschritten werden.

Es kann gegebenenfalls eine modellbasierte Korrektur des Energiegehaltes im Gaskraftstoffs welcher dem Motor im jeweiligen Betriebspunkt zugeführt wird, vorgenommen werden wobei diese Korrektur über die Umgebungstemperatur, den Tankdruck im Gaskraftstofftank, die Einspritzzeit des Gaskraftstoffs, die Entnahmemenge des Gaskraftstoffs, die Gaskraftstofftemperatur, bzw. die Temperaturdifferenz die im Wärmetauscher Kühlwasser und Gasdurchströmung des Gasdruckreglers gemessen wird.

Bevorzugt wird durch das Abgreifen eines Kurbelwellensensorsignals und eines Nockenwellensensorsignals eine genaue Definition des Einspritzverlaufs der Dieselinjektoren erstellt. Zusammen mit der Abbildung der Einspritzzeiten aus der Original ECU ist es möglich die Basiskennfelder des Originalmotors zu erfassen und genau nachzubilden.

### Kurze Beschreibung der Figuren

Weitere Einzelheiten und Vorteile der Erfindung können der nachfolgenden ausführlichen Beschreibung zweier verschiedener Ausgestaltungen der Erfindung anhand der beiliegenden Figuren entnommen werden. Diese zeigen:
Fig. 1: eine schematische Schaltplananordnung eines erfindungsgemäßen Einspritzungssteuergeräts, welches Magnetventil-Injektoren ansteuert,
Fig. 2: eine schematische Schaltplananordnung eines erfindungsgemäßen Einspritzungssteuergeräts, welches Piezo-Injektoren ansteuert,
Fig. 3: einen schematischen Verlauf eines Einspritzungssteuersignals und eines Dieseleinspritzungssteuersignals,
Fig. 4: einen schematischen Verlauf eines Einspritzungssteuersignals mit einer Nacheinspritzung und eines Dieseleinspritzungssteuersignals mit doppelter Nacheinspritzung.

### Beschreibung verschiedener Ausgestaltungen der Erfindung

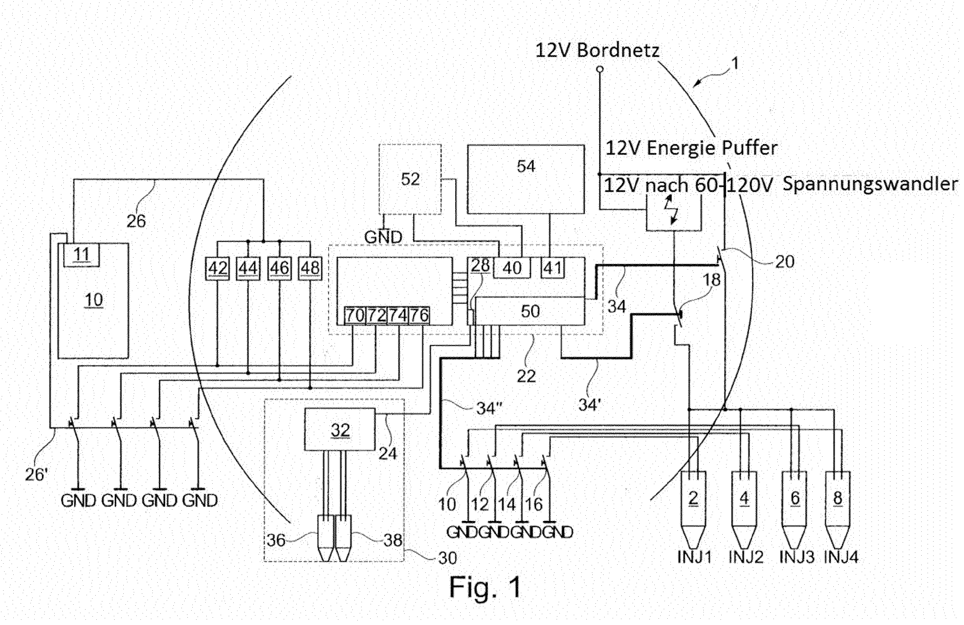

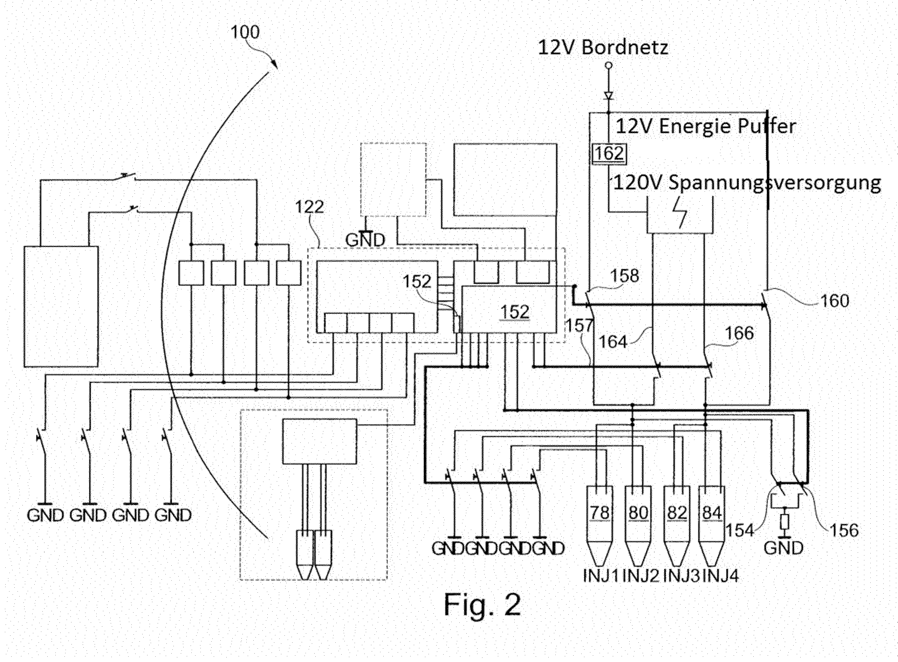

Im Folgenden werden nun zwei bevorzugte Anordnungen eines nachrüstbaren Einspritzungssteuergeräts vorgestellt, welches die Kraftstoffvorrichtung eines Dieselmotors, für den Mischbetrieb mit Gaskraftstoff, steuert. Das Einspritzungssteuergerät 1 in Fig. 1 ist in Serie zwischen die Motorsteuerungseinheit 10 und die Diesel-Injektoren 2, 4, 6, 8 des Dieselmotors geschaltet. Die in Fig. 1 gezeigte Anordnung des Einspritzungssteuergeräts unterscheidet sich von der Anordnung in Fig. 2, durch den im Diesel-Injektor verwendeten Aktuator und das damit verbundene, unterschiedliche Ansteuerungsprinzip.

In Fig. 1 werden Diesel-Injektoren (Magnetventil-Injektoren oder auch wahlweise Piezo Injektoren) 2, 4, 6, 8 verwendet, welche die Düsennadel durch ein Magnetventil in eine Öffnungsposition bringen. Die Düsennadel ist in einer Schließposition vorgespannt und wird im Betrieb vom Aktuator durch Anlegen einer Spannung geöffnet. Zum Öffnen eines Diesel-Injektors wird der zu öffnende Diesel-Injektor zuerst über einen, von der Prozessoreinrichtung gesteuerten Schalter 10, 12, 14 oder 16 von dem Einspritzungssteuergerät zur Masse geschaltet (geerdet). Anschließend wird kurzzeitig eine Bordnetzspannung als Beispiel 12 oder 24 Volt-Spannung über einen der Schalter 18, 20 an den (geerdeten) Diesel-Injektor geleitet, um eine Vormagnetisierung der Spule des zu öffnenden Injektors zu erreichen. Um ein schnelles Öffnen des angesteuerten Diesel-Injektors zu ermöglichen, wird der Diesel-Injektor mit einer wesentlich höheren Spannung als die der Batterie beaufschlagt. Dies erfolgt durch Schließen des Schalters 18 von der Motorsteuerungseinheit 10, um den geerdeten Injektor mit einer höheren Spannung (Boosterspannung), von 12 Volt bis 120 Volt (je nach Typ des verwendeten Dieselinjektors) zu versorgen. Nach einem kurzen Ansteuern über den Schalter 18 wird der Schalter 18 geöffnet und anschließend der Schalter 20 getaktet wieder geschlossen, um den Haltestrom der Magnetspule des angesteuerten Magnetventil-Injektors zu garantieren. Am Ende der Dieseleinspritzung wird der Schalter 20 wieder geöffnet.

Das Dieseleinspritzungssteuersignal, welches zum Steuern der Diesel-Injektoren 2, 4, 6, 8 in Fig.1 benötigt wird, wird von der Prozessoreinrichtung 22 des Dieselmotors am Ausgangsport 50 ausgegeben. Die Prozessoreinrichtung 22 erzeugt unabhängig vom Empfangen des Einspritzungssteuersignals, welches am Ausgangsport 11 der Motorsteuerungseinheit 10 ausgegeben und über die Verbindungsleitung 26, 26' und die Ersatzlasten 42, 44, 46, 48 zu den Eingangsporten 70, 72, 74, 76 der Prozessoreinrichtung 22 geleitet wird, das Dieseleinspritzungssteuersignal. Die die Kraftstoffeinspritzungsvorrichtung simulierenden elektrischen Ersatzlasten der Einspritzventile sind auf Basis elektrischer Widerstände und elektrischer Induktivität aufgebaut oder weisen ein Ersatzschaltbild eines Piezoaktors auf. Die Ersatzlasten werden somit nicht über Transistoren oder Transistorschaltungen nachgebildet. Außerdem werden die Originaleinspritzventile nicht als Ersatzlasten genutzt. Die simulierenden, elektrischen Ersatzlasten sind an den, ein Einspritzungssteuersignal ausgebenden, Ausgangsport einer Motorsteuerungseinheit anschließbar.

Das Einspritzungssteuergerät ist über den Aufbau des Schaltbildes in der Lage, eigenständig sowohl den Beginn der Dieseleinspritzungen als deren Länge und Anzahl zu generieren. Somit besteht keine Notwendigkeit seitens der fahrzeugspezifischen Motorsteuerung, ECU, ein Einspritzsignal oder einen Einspritzimpuls abzuwarten. Es resultiert somit aus der hier beschriebenen Ansteuerung, dass sowohl der Start, die Länge und auch die Anzahl der Dieseleinspritzungen frei wählbar und gestaltbar sind. Die Prozessoreinrichtung 22 ermöglicht es, für den Fall, dass ein Gaseinspritzungssteuersignal ausgegeben werden soll, aus dem Einspritzungssteuersignal das Gaseinspritzungssteuersignal und das Dieseleinspritzungssteuersignal zu ermitteln. Das Gaseinspritzungssteuersignal wird von dem Ausgangsport 28 der Prozessoreinrichtung 22 über die Verbindungsleitung 24 an den Eingangsport 32 der Gaseinspritzungsvorrichtung 30 geleitet.

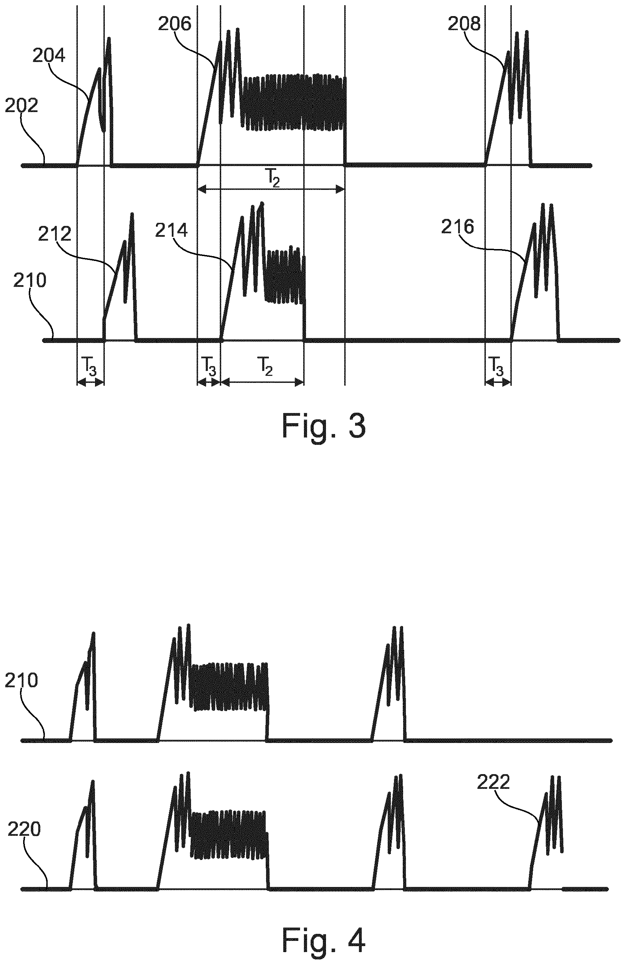

Wird ein Gaseinspritzungssteuersignal ausgegeben, modifiziert die Prozessoreinrichtung 22 das Dieseleinspritzungssteuersignal gegenüber dem Einspritzungssteuersignal, wobei eine durch das Einspritzungssteuersignal vorgegebene Nennleistung des Dieselmotors im Mischbetrieb mit Gas nicht überschritten wird. Grundsätzlich wird im Mischbetrieb eine bestimmte Dieseleinspritzmenge durch eine bestimmte Gaseinspritzmenge ersetzt. Das Reduzieren der Dieseleinspritzmenge wird vorzugsweise durch Verringern der Einspritzdauer der Haupteinspritzung im Mischbetrieb erreicht, wie in Fig. 3 dargestellt. Wird kein Gaseinspritzungssteuersignal ausgegeben, so entspricht das Dieseleinspritzungssteuersignal im Wesentlichen dem Einspritzungssteuersignal.

Die Gaseinspritzungsvorrichtung 30 steuert die Gas-Injektoren 36, 38 abhängig vom Gaseinspritzungssteuersignal. In montiertem Zustand injizieren die Gas-Injektoren 36, 38 den Gaskraftstoff in das Saugrohr des Dieselmotors, wodurch es mit der im Betrieb angesaugten Frischluft überwiegend homogen vermischt wird. Das Gaseinspritzungssteuersignal wird während des Betriebs in Abhängigkeit der vorgegebenen Nennleistung, von der Prozessoreinrichtung 22 verändert, wobei die vorgegebene Nennleistung der Leistung des Dieselmotors im Normalbetrieb entspricht (ohne das Zuführen von Gaskraftstoff).

Die Nennleistung sowie die Mischverhältnisse werden auf dem Prüfstand ermittelt und auf einem Speicher der Prozessoreinrichtung hinterlegt. Auf dem Prüfstand wird die Dauer der Haupteinspritzung verkürzt und die Nennleistung im reinen Dieselbetrieb ermittelt. Aus der fehlenden Nennleistung wird die fehlende Dieselenergie berechnet und durch die gleiche Menge an Gasenergie im Mischbetrieb ersetzt. Sind die Kennfelder für die einzuspritzende Dieselmenge und die einzuspritzende Gasmenge festgelegt, werden diese jeweils als Kennfelder im Speicher der Prozessoreinrichtung hinterlegt und können zum Betrieb des Dieselmotors ausgelesen werden.

Es besteht die Möglichkeit die Dieselmenge aus den Einspritzdauern (Voreinspritzung, Haupteinspritzung und Nacheinspritzung) des anliegenden Einspritzungssteuersignals an den Ersatzlasten und dem Raildruck anhand einer "Lookup-Table", zu berechnen. Die "Lookup-Table" wird während eines Prüfstandversuchs erstellt und bestimmt unabhängig vom Einspritzungssteuersignal die einzuspritzende Gasmenge und die einzuspritzende Dieselmenge.

Die Prozessoreinrichtung schaltet über die Verbindungsleitungen 34, 34' die Schalter 18, 20 des jeweiligen Diesel-Injektors, der über den zweiten Ausgangsport 50 der Prozessoreinrichtung 22 gekoppelt - und über die Verbindungsleitung 34" geerdet ist -, in Abhängigkeit des Dieseleinspritzungssteuersignals, welches gemäß der Dieseleinspritzungsparameter geformt wird. Im Mischbetrieb erstellt die Prozessoreinheit unabhängig ein Dieseleinspritzungssteuersignal 210, wie in Fig. 3, mit einer kürzeren Haupteinspritzung 214 im Vergleich zur Haupteinspritzung 206 des eingelesenen Einspritzungssteuersignals 202. Weiter ist das Dieseleinspritzungssteuersignal 210 unabhängig vom Einspritzungssteuersignal 202 als Ganzes um die Zeit T3 verzögert. Daraus ergibt sich, dass die jeweiligen Beginne von Vor- 212; Haupt- 214 und gegebenenfalls Nacheinspritzungen 216 in Richtung "spät" verschoben werden, um die Stickoxidemissionen im Abgas des Dieselmotors zu reduzieren. Die Einspritzungsparameter wie beispielsweise die Anzahl an Voreinspritzungen (Piloteinspritzungen), die Anzahl an Haupteinspritzungen und die Voreinspritzungsdauer werden von dem Dieseleinspritzungssteuersignal als Basis (Master) übernommen, um kostenintensive Testläufe des Dieselmotors zu umgehen. Durch die Entkopplung der Diesel-Injektoren 2, 4, 6, 8 von der Motorsteuerungseinheit 10, können die Dieseleinspritzungsparameter unabhängig von den Einspritzungsparametern, zur Optimierung der Verbrennung, beliebig verändert werden. Beispielsweise kann das Dieseleinspritzungssteuersignal 218 unabhängig von dem Einspritzungssteuersignal 220 so modifiziert werden, dass eine zusätzliche Nacheinspritzung 222, wie in Fig. 4 dargestellt, durchgeführt wird, um die Kohlenwasserstoffe im Abgas zu reduzieren.

Zur weiteren Verbrauchsreduzierung und Abgasoptimierung, werden im Betrieb einige der Parameter des Parametersatzes von der Prozessoreinrichtung 22 eingelesen und zur Ermittlung des Dieseleinspritzungssteuersignals und des Gaseinspritzungssteuersignals verwendet. Der Parametersatz umfasst: die Drehzahl, das Lambda, die Fahrpedalposition, die Motortemperatur, die Lufttemperatur, den Ladedruck, die Wassertemperatur, die Kraftstofftemperatur, die Luftmasse, Gasdruck, Gastemperatur, usw. Einige der Parameter werden durch Sensoren und Sollwertgeber erfasst, welche jeweils eine Schnittstelle 54 aufweisen, die mit einer jeweiligen Schnittstelle 41 der Prozessoreinrichtung 22 betrieblich gekoppelt ist. In diesem Fall entspricht die Schnittstelle 54, der Schnittstelle des Map-Sensors oder Luftmassensensors. Über die Schnittstelle 40 werden die restlichen Parameter des Parametersatzes eingelesen, welche bereits von der Motorsteuerungseinheit ermittelt, beziehungsweise berechnet wurden. Einer der über die Schnittstelle 41 eingelesenen Parameter gibt die Füllung des Gastanks an. Ist der Gastank leer, schaltet die Prozessoreinrichtung 10 auf reinen Dieselbetrieb um und gibt kein Gaseinspritzungssteuersignal mehr aus.

Durch den in die Schnittstellen eingelesenen Parametersatz, ist das Einspritzungssteuergerät darüber hinaus in der Lage die abgasrelevanten Stellglieder und Dosiermengensteller zu beobachten und bei Bedarf anzusteuern. Hierzu zählen vor allem die AHI (hydrocarbon injector), SCR (selective catalytic reduction) und EGR (exhaust gas recirculation) Stellglieder und Dosiermengensteller, wobei diese Ansteuerung entweder über Ersatzlastenschaltbild oder Pulsweitenmodulierte Schaltung, PWM, durchgeführt werden können.

Des Weiteren ist ein thermisches Überwachungssystem des Abgassystems, insbesondere zum Messen von Temperaturen vor und nach dem Dieselpartikelfilter, an das Einspritzungssteuergerät anschließbar. Über Regelung und Steuerung der Gemischbildung ist somit ein Übersteigen von Temperaturmaxima vermeidbar, was für die Funktionalität und Lebenserwartung der Abgasreinigungsanlage von höchster Relevanz ist.

Die Prozessoreinrichtung 122 der zweiten Einspritzungssteuerung 100 in Fig. 2 umfasst einen zusätzlichen Ausgangsport 152, welcher ein Signal zum Betätigen der Schalter 164, 166 über die Verbindungsleitung 157 ausgibt. Unmittelbar nach der Dieseleinspritzung (Vor- und Haupteinspritzung) muss der Piezo-Injektor zum Schließen entladen werden. Die Prozessoreinrichtung 122 steuert diesen Entladevorgang entweder durch Betätigen der Schalter 154, 156 oder der Schalter 158, 160. Durch Schließen der Schalter 158, 160 wird der Piezo-Injektor entladen und die darin gespeicherte Energie in dem 12 oder 24 Volt Energiespeicher 162 rückgewonnen. Anschließend kann die Energie für nachfolgende Einspritzvorgänge wiederverwendet werden.

Das Einspritzungssteuergerät ist für den nachträglichen Einbau an Dieselmotoren (Common Rail, Pumpe-Leitung-Düse, usw.), als Retro-Fit System, einsetzbar. Die Vorrichtung erlaubt es, neben dem autonomen Generieren und Variieren der Einspritzsignale an moderneren Common Rail Einspritzsystemen, auch noch zeitgleich eine zweite elektro-mechanische Steuereinheit beim gleichen Arbeitszylinder selektiv anzusteuern. (X Pulse Einspritzsystem - Druckverstärkung).

Das Einspritzungssteuergerät als Retro-Fit-Kraftstoffeinspritzungsvorrichtung ist darüber hinaus auch in der Lage, den Dieselmengensteller bezüglich geförderter Dieselmenge anzusteuern und die angepasste Dieselmenge in Bezug zur Einspritzlänge des Injektors zu definieren, um somit eine Fehlfunktion des originalen Dieselmanagements zu vermeiden.

Ein Vorteil besteht darin, dass auf der Dieselseite sowohl Spulen- als auch Piezoinjektoren angesteuert werden können und deren Kraftstoffmengendosierung in Bezug auf Last- und Drehzahl des Dieselmotors, frei gestalten werden kann.

### Zeichenerklärung:

- 1, 100: Einspritzungssteuergerät
- 2, 4, 6, 8: Magnetventilinjektor
- 10, 12, 14, 16, 18, 20, 154, 156, 164, 166: Schalter
- 11, 152: Ausgangsport
- 22, 122: Prozessoreinrichtung
- 17, 34, 34', 34", 26, 26', 157: Verbindungsleitung
- 28, 40, 41, 52, 54: Schnittstelle
- 30: Gaseinspritzungsvorrichtung
- 32, 70, 72, 74, 76: Eingangsport
- 36, 38: Gas-Injektoren
- 42, 44, 46, 48: Ersatzlasten
- 50: Ausgangsport
- 78, 80, 82, 84: Piezo-Injektor
- 162: Energiespeicher
- 202, 218: Einspritzungssteuersignal
- 210, 220: Dieseleinspritzungssteuersignal
- 204, 212: Voreinspritzung
- 206, 214: Haupteinspritzung
- 208, 216, 222: Nacheinspritzung

## Patentansprüche

1. Einspritzungssteuergerät zum Steuern einer Kraftstoffeinspritzungsvorrichtung eines Dieselmotors für den Mischbetrieb mit einem Gaskraftstoff, das Einspritzungssteuergerät umfassend:
- eine die Kraftstoffeinspritzungsvorrichtung simulierende elektrische Ersatzlast, welche an einen, ein Einspritzungssteuersignal ausgebenden, Ausgangsport einer Motorsteuerungseinheit anschließbar ist,
- eine Prozessoreinrichtung umfassend:
∘ einen Eingangsport zum Empfangen des Einspritzungssteuersignals, welches gemäß von der Motorsteuerungseinheit bestimmten Einspritzungsparametern geformt ist;
∘ einen ersten Ausgangsport zum Ausgeben eines, gegebenenfalls von der Prozessoreinrichtung gegenüber dem Einspritzungssteuersignal modifizierten Dieseleinspritzungssteuersignals an die Diesel-Injektoren des Dieselmotors; und
∘ einen zweiten Ausgangsport zum Ausgeben eines Gaseinspritzungssteuersignals zum Steuern einer Gaseinspritzungsvorrichtung; wobei durch die Ersatzlast die Motorsteuerungseinheit von den Diesel-Injektoren entkoppelt ist und die Prozessoreinrichtung derart konfiguriert ist, dass sie das Dieseleinspritzungssteuersignal und das Gaseinspritzungssteuersignal sowie den Beginn, die Länge und die Anzahl der Dieseleinspritzungen und der Gaseinspritzungen unabhängig von dem Einspritzungssteuersignal erzeugt, wobei die Prozessoreinrichtung das Dieseleinspritzungssteuersignal und das Gaseinspritzungssteuersignal aufeinander abstimmt und dabei das Dieseleinspritzungssteuersignal gegenüber dem Einspritzungssteuersignal zumindest dann modifiziert, wenn am zweiten Ausgangsport das Gaseinspritzungssteuersignal zum Betreiben des Dieselmotors im Mischbetrieb mit Gaskraftstoff ausgegeben wird, und **dadurch gekennzeichnet, dass** das Einspritzungssteuergerät zum Erkennen der Dieselpartikelfilterregeneration ausgelegt ist, und bei erkannter Dieselpartikelfilterregeneration den Dieselmotor in reinem Dieselbetrieb betreibt.

2. Einspritzungssteuergerät nach Anspruch 1 , wobei die Prozessoreinrichtung derart konfiguriert ist, dass sie das Dieseleinspritzungssteuersignal und das Gaseinspritzungssteuersignal so aufeinander abstimmt, dass eine vorgegebene Nennleistung des Dieselmotors im Mischbetrieb mit Gaskraftstoff nicht überschritten wird.

3. Einspritzungssteuergerät nach einem der vorherigen Ansprüche, wobei das Einspritzungssteuergerät mindestens eine Schnittstelle zum Empfangen eines Parametersatzes umfasst, wobei der Parametersatz einen oder mehrere der folgenden Parameter umfasst:
Drehzahl,
Sauerstoffanteil/Restsauerstoff Abgas (Lambda),
Fahrpedalposition,
Motorlast
Motorlast angefordert
Motorlast ausgegeben
Motortemperatur,
Ansauglufttemperatur,
Ladedruck,
Wassertemperatur,
Kraftstofftemperatur sowohl auf Diesel als auch Gasseite,
Gasdrucksensor,
Zusätzlichem Kühlmittelkreislauf Sensor (beispielweise LNG Heizkreislauf),
EGR Rate,
AHI Rate und Ansteuerung,
SCR Ansteuerung und Überwachung,
NOx Sensoren,
Luftmasse,
Dieselkraftstoffdruck, und
Abgastemperatur.

4. Einspritzungssteuergerät nach Anspruch 3, wobei die Prozessoreinrichtung so konfiguriert ist, dass sie den empfangenen Parametersatz zur Erzeugung des Dieseleinspritzungssteuersignals und/oder des Gaseinspritzungssteuersignals mitberücksichtigt.

5. Einspritzungssteuergerät nach Anspruch 3 oder 4, wobei das Einspritzungssteuergerät mindestens einen Sensor umfasst, welcher zur Ermittlung des Parametersatzes verwendet wird, wobei der Sensor eine Sensorschnittstelle aufweist, welche mit der mindestens einen Schnittstelle des Einspritzungssteuergeräts wirkverbunden ist.

6. Einspritzungssteuergerät nach einem der vorherigen Ansprüche, wobei das Einspritzungssteuergerät so ausgelegt ist, dass es die Dieselpartikelfilterregeneration nach mindestens einem der folgenden Modi erkennt:
- Abgreifen einer Temperatur eines Abgasstrangs, über eine Schnittstelle des Einspritzungssteuergeräts, welche mit einer Schnittstelle einer Motorsteuerungseinheit wirkverbunden ist,
- Abgreifen einer Temperatur des Abgasstrangs, über eine Schnittstelle des Einspritzungssteuergeräts, welche mit einer Schnittstelle eines Temperaturfühlers wirkverbunden ist, oder
- Abtasten und Auswerten des Einspritzungssteuersignals durch das Einspritzungssteuergerät zum Erkennen einer Nacheinspritzung im Falle einer Dieselpartikelfilterregeneration.

7. Einspritzungssteuergerät nach einem der vorherigen Ansprüche, wobei das Einspritzungssteuergerät zum Erkennen eines Fahrprofils ausgelegt ist, wobei die Prozessoreinrichtung das Dieseleinspritzungssteuersignal gemäß dem erkannten Fahrprofil modifiziert.

8. Einspritzungssteuergerät nach einem der vorherigen Ansprüche, wobei das Dieseleinspritzungssteuersignal gegenüber dem Einspritzungssteuersignal im Mischbetrieb mit Gaskraftstoff so modifiziert ist, dass ein Dieselkraftstoff zeitlich verzögert eingespritzt werden kann.

9. Einspritzungssteuergerat nach einem der vorherigen Ansprüche, umfassend mindestens einen Gas-Injektor zum Einspritzen des Gaskraftstoffs, wobei der Gas-Injektor einen Anschluss zum Empfang des Gaseinspritzungssteuersignals aufweist und so positioniert ist, dass der Gaskraftstoff mit der vom Dieselmotor angesaugten Frischluft vermischt wird, indem zwei und mehr Injektoren im Saugrohr oder in einer Vormischvorrichtung des Dieselmotors angeordnet sind, oder indem lange Vormischstrecken und ein Pre-mix Verfahren einsetzbar sind.

10. Einspritzungssteuergerät nach einem der vorherigen Ansprüche, wobei das Dieseleinspritzungssteuersignal gegenüber dem Einspritzungssteuersignal im Mischbetrieb mit Gaskraftstoff so modifiziert ist, dass das Dieseleinspritzungssteuersignal gegenüber dem Einspritzungssteuersignal mindestens eine zusätzliche Nacheinspritzung bewirkt.

11. Einspritzungssteuergerät nach einem der vorherigen Ansprüche, wobei das Dieseleinspritzungssteuersignal gegenüber dem Einspritzungssteuersignal im Mischbetrieb mit Gaskraftstoff so modifiziert ist, dass durch das Dieseleinspritzungssteuersignal eine durch das Einspritzungssteuersignal vorgesehene Voreinspritzung unterdrückt ist und, dass das Dieseleinspritzungssteuersignal eine gegenüber dem Einspritzungssteuersignal zeitlich vorgezogene Haupteinspritzung bewirkt.

12. Verfahren zum Steuern einer Kraftstoffeinspritzungsvorrichtung eines Dieselmotors für den Mischbetrieb mit Gaskraftstoff, umfassend:
- Simulieren einer Kraftstoffeinspritzungsvorrichtung mit einer elektrischen Ersatzlast durch welche die Motorsteuerungseinheit von einem Diesel-Injektoren entkoppelt ist,
- unabhängig von dem Einspritzungssteuersignal, Erzeugen eines Dieseleinspritzungssteuersignals und eines Gaseinspritzungssteuersignals sowie den Beginn, die Länge und die Anzahl der Dieseleinspritzungen und der Gaseinspritzungen durch die Prozessoreinrichtung eines Einspritzungssteuergeräts, wobei das Dieseleinspritzungssteuersignal gegenüber dem Einspritzungssteuersignal modifiziert ist, und das erzeugte Dieseleinspritzungssteuersignal sowie das erzeugte Gaseinspritzungssteuersignal aufeinander abgestimmt sind,
- Anlegen des Dieseleinspritzungssteuersignals an den Diesel-Injektor; und
- Anlegen des Gaseinspritzungssteuersignals an einen Gas-Injektor, **dadurch gekennzeichnet, dass** bei erkannter Dieselpartikelfilterregeneration der Dieselmotor in reinem Dieselbetrieb betrieben wird, d.h. kein Gaseinspritzungssteuersignal ausgegeben wird und das Dieseleinspritzungssteuersignal dem Einspritzungssteuersignal entspricht.

13. Verfahren zum Steuern einer Kraftstoffeinspritzungsvorrichtung eines Dieselmotors für den Mischbetrieb mit Gaskraftstoff nach Anspruch 12, wobei das Dieseleinspritzungssteuersignal und das Gaseinspritzungssteuersignal so aufeinander abgestimmt sind, dass eine vorgegebene Nennleistung und Solldrehmoment des Dieselmotors im Mischbetrieb mit Gaskraftstoff nicht überschritten werden.

## Claims

1. An injection controller for controlling a fuel injection device of a diesel engine for mixed-mode operation with a gaseous fuel, the injection controller comprising:
- an electrical dummy load which simulates the fuel injection device and is connectable to an output port of an engine control unit which outputs an injection control signal,
- a processor device comprising:
∘ an input port for receiving the injection control signal which is shaped in accordance with the injection parameters determined by the engine control unit;
∘ a first output port for outputting a diesel injection control signal, which is modified, when appropriate, by the processor device relative to the injection control signal, to the diesel injectors of the diesel engine; and
∘ a second output port for outputting a gas injection control signal for controlling a gas injection device;
wherein the engine control unit is disconnected from the diesel injectors by the electrical dummy load and the processor device is configured such that it generates the diesel injection control signal and the gas injection control signal as well as the start, length and number of diesel injections and gas injections independently of the injection control signal, wherein the processor device adapts the diesel injection control signal and the gas injection control signal to one another and in so doing modifies the diesel injection control signal relative to the injection control signal at least when the gas injection control signal is output at the second output port for operating the diesel engine in mixed-mode operation with gaseous fuel, and **characterised in that** the injection controller is designed to detect diesel particulate filter regeneration and operates the diesel engine in pure diesel mode when diesel particulate filter regeneration is detected.

2. An injection controller according to claim 1, wherein the processor device is configured such that it adapts the diesel injection control signal and the gas injection control signal to one another in such a manner that, in mixed-mode operation with gaseous fuel, a specified nominal power of the diesel engine is not exceeded.

3. An injection controller according to one of the preceding claims, wherein the injection controller comprises at least one interface for receiving a parameter set, wherein the parameter set comprises one or more of the following parameters:
engine speed,
exhaust gas oxygen content/residual oxygen (lambda),
accelerator pedal position,
engine load,
demanded engine load,
output engine load,
engine temperature,
intake air temperature,
boost pressure,
water temperature,
fuel temperature on both diesel and gas sides,
gas pressure sensor,
additional coolant circuit sensor (e.g. LNG heating circuit),
EGR rate,
AHI rate and actuation,
SCR actuation and monitoring,
NOx sensors,
air mass,
diesel fuel pressure, and
exhaust gas temperature.

4. An injection controller according to claim 3, wherein the processor device is configured such that it also takes account of the received parameter set for generating the diesel injection control signal and/or the gas injection control signal.

5. An injection controller according to claim 3 or 4, wherein the injection controller comprises at least one sensor which is used for determining the parameter set, wherein the sensor has a sensor interface which is operatively connected to the at least one injection controller interface.

6. An injection controller according to one of the preceding claims, wherein the injection controller is designed such that it detects diesel particulate filter regeneration in accordance with at least one of the following modes:
- sensing a temperature of an exhaust gas line via an injection controller interface which is operatively connected to an engine control unit interface,
- sensing a temperature of the exhaust gas line via an injection controller interface which is operatively connected to a temperature sensor interface, or
- sampling and evaluating the injection control signal by the injection controller to detect post-injection in the case of diesel particulate filter regeneration.

7. An injection controller according to one of the preceding claims, wherein the injection controller is designed to detect a driving profile, wherein the processor device modifies the diesel injection control signal in accordance with the detected driving profile.

8. An injection controller according to one of the preceding claims, wherein, in mixed-mode operation with gaseous fuel, the diesel injection control signal is modified relative to the injection control signal in such a manner that a diesel fuel may be injected with a time delay.

9. An injection controller according to one of the preceding claims, comprising at least one gas injector for injecting the gaseous fuel, wherein the gas injector has a terminal for receiving the gas injection control signal and is positioned such that the gaseous fuel is mixed with the fresh air taken in by the diesel engine, thanks to two or more injectors being arranged in the intake manifold or in a pre-mixing device of the diesel engine, or to the use of long pre-mixing sections and a pre-mix method.

10. An injection controller according to one of the preceding claims, wherein, in mixed-mode operation with gaseous fuel, the diesel injection control signal is modified relative to the injection control signal in such a manner that the diesel injection control signal brings about at least one additional post-injection relative to the injection control signal.

11. An injection controller according to one of the preceding claims, wherein, in mixed-mode operation with gaseous fuel, the diesel injection control signal is modified relative to the injection control signal in such a manner that a pre-injection provided by the diesel injection control signal is suppressed and that the diesel injection control signal brings about a main injection which is advanced in time relative to the injection control signal.

12. A method for controlling a fuel injection device of a diesel engine for mixed-mode operation with gaseous fuel, comprising:
- simulating a fuel injection device with an electrical dummy load by which the engine control unit is disconnected from the diesel injectors,
- independently of the injection control signal, generating a diesel injection control signal and a gas injection control signal as well as the start, length and number of diesel injections and gas injections by the processor device of an injection controller, wherein the diesel injection control signal is modified relative to the injection control signal, and the generated diesel injection control signal and the generated gas injection control signal are adapted to one another,
- applying the diesel injection control signal to a diesel injector; and
- applying the gas injection control signal to a gas injector,
**characterised in that**, when diesel particulate filter regeneration is detected, the diesel engine is operated in pure diesel mode, i.e. no gas injection control signal is issued and the diesel injection control signal corresponds to the injection control signal.

13. A method for controlling a fuel injection device of a diesel engine for mixed-mode operation with gaseous fuel according to claim 12, wherein the diesel injection control signal and the gas injection control signal are adapted to one another in such a manner that, in mixed-mode operation with gaseous fuel, a specified nominal power and setpoint torque of the diesel engine are not exceeded.

## Revendications

1. Dispositif de commande d'injection pour commander le dispositif d'injection de carburant dans un moteur Diesel pour le fonctionnement mixte avec un carburant à base de gaz, le dispositif de commande d'injection comprenant :
- une charge de rechange électrique simulant le dispositif d'injection de carburant, laquelle peut être raccordée à une prise de sortie d'une unité de commande de moteur émettant un signal de commande d'injection,
- un dispositif à processeur comprenant :
• une prise d'entrée pour recevoir le signal de commande d'injection, lequel est formé selon des paramètres d'injection déterminés par l'unité de commande du moteur,
• une première prise de sortie pour émettre aux injecteurs de Diesel du moteur Diesel un signal de commande d'injection de Diesel modifié le cas échéant par le dispositif à processeur par rapport au signal de commande d'injection, et
• une deuxième prise de sortie pour émettre un signal de commande d'injection de gaz pour commander un dispositif d'injection de gaz,
l'unité de commande du moteur étant découplée des injecteurs de Diesel par la charge de rechange et le dispositif à processeur étant configuré de telle sorte qu'il produit le signal de commande d'injection de Diesel et le signal de commande d'injection de gaz ainsi que le début, la longueur et le nombre des injections de Diesel et des injections de gaz indépendamment du signal de commande d'injection, le dispositif à processeur adaptant le signal de commande d'injection de Diesel et le signal de commande d'injection de gaz l'un par rapport à l'autre et modifiant à cet effet le signal de commande d'injection de Diesel par rapport au signal de commande d'injection, au moins lorsque le signal de commande d'injection de gaz est émis à la deuxième prise de sortie pour faire fonctionner le moteur Diesel en fonctionne-ment mixte avec du carburant à base de gaz et **caractérisé en ce que** le dispositif de commande d'injection est conçu pour identifier la régénéra-tion de filtre à particules Diesel et fait fonc-tionner le moteur Diesel dans un fonctionnement Diesel pur lorsqu'une régénération de filtre à particules Diesel est identifiée.

2. Dispositif de commande d'injection selon la revendication 1, le dispositif à processeur étant configuré de telle sorte qu'il adapte le signal de commande d'injection de Diesel et le signal de commande d'injection de gaz l'un par rapport à l'autre de telle sorte qu'une puissance nominale prédéfinie du moteur Diesel n'est pas dépassée dans le fonctionnement mixte avec le carburant à base de gaz.

3. Dispositif de commande d'injection selon l'une quelconque des revendications précédentes, le dispositif de commande d'injection comprenant au moins une interface pour recevoir un jeu de paramètres, le jeu de paramètres comprenant un ou plusieurs des paramètres suivants :
régime,
part d'oxygène/oxygène résiduel (Lambda),
position de l'accélérateur,
charge du moteur
charge du moteur demandée,
charge du moteur dégagée,
température du moteur,
température de l'air d'aspiration,
pression de suralimentation,
température de l'eau,
température du carburant tant du côté Diesel que du côté gaz,
capteur de pression du gaz,
capteur supplémentaire circuit de réfrigérant (par exemple circuit de chauffage GNL),
taux RGE (recirculation des gaz d'échappement),
taux AHI et activation
activation et contrôle RCS (réduction catalytique sélective),
capteurs NOx,
masse d'air,
pression de carburant Diesel, et
température des gaz d'échappement.

4. Dispositif de commande d'injection selon la revendication 3, le dispositif à processeur étant configuré de telle sorte qu'il tient compte du jeu de paramètres reçu pour produire le signal de commande d'injection de Diesel et/ou le signal de commande d'injection de gaz.

5. Dispositif de commande d'injection selon la revendication 3 ou 4, le dispositif de commande d'injection comprenant au moins un capteur, lequel est utilisé pour déterminer le jeu de paramètres, le capteur comportant une interface de capteur, laquelle est reliée de façon fonctionnelle à au moins une interface du dispositif de commande d'injection.

6. Dispositif de commande d'injection selon l'une quelconque des revendications précédentes, le dispositif de commande d'injection étant conçu de telle sorte qu'il identifie la régénération de filtre à particules Diesel selon au moins un des modes suivants :
- prélèvement d'une température d'un circuit de gaz d'échappement par une interface du dispositif de commande d'injection, laquelle est reliée de façon fonctionnelle à une interface d'une unité de commande de moteur,
- prélèvement d'une température d'un circuit de gaz d'échappement par une interface du dispositif de commande d'injection, laquelle est reliée de façon fonctionnelle à une interface d'un capteur de température, ou
- échantillonnage et exploitation du signal de commande d'injection par le dispositif de commande d'injection pour identifier une injection ultérieure en cas d'une régénération de filtre à particules Diesel.

7. Dispositif de commande d'injection selon l'une quelconque des revendications précédentes, le dispositif de commande d'injection étant conçu pour identifier un profil de conduite, le dispositif à processeur modifiant le signal de commande d'injection de Diesel selon le profil de conduite identifié.

8. Dispositif de commande d'injection selon l'une quelconque des revendications précédentes, le signal de commande d'injection de Diesel étant modifié par rapport au signal de commande d'injection dans un fonctionnement mixte avec du carburant à base de gaz de telle sorte qu'un carburant Diesel peut être injecté de façon retardée dans le temps.

9. Dispositif de commande d'injection selon l'une quelconque des revendications précédentes, comprenant au moins un injecteur de gaz pour injecter du carburant à base de gaz, l'injecteur de gaz comportant une connexion pour recevoir le signal de commande d'injection de gaz et étant positionné de telle sorte que le carburant à base de gaz est mélangé à l'air frais aspiré par le moteur Diesel par le fait que deux ou plusieurs injecteurs sont disposés dans le tuyau d'aspiration ou dans un dispositif de prémélange du moteur Diesel ou par le fait que des longues distances de prémélange et un processus de prémélange peuvent être utilisés.

10. Dispositif de commande d'injection selon l'une quelconque des revendications précédentes, le signal de commande d'injection de Diesel étant modifié par rapport au signal de commande d'injection dans le fonctionnement mixte avec du carburant à base de gaz de telle sorte que le signal de commande d'injection de Diesel cause au moins un injection ultérieure supplémentaire par rapport au signal de commande d'injection.

11. Dispositif de commande d'injection selon l'une quelconque des revendications précédentes, le signal de commande d'injection de Diesel étant modifié par rapport au signal de commande d'injection dans le fonctionnement mixte avec du carburant à base de gaz de telle sorte que par le signal de commande d'injection de Diesel une préinjection prévue par le signal de commande d'injection est supprimée et que le signal de commande d'injection de Diesel cause une injection principale anticipée dans le temps par rapport au signal de commande d'injection.

12. Procédé pour commander un dispositif d'injection de carburant d'un moteur Diesel pour le fonction-nement mixte avec un carburant à base de gaz, comprenant :
- la simulation d'un dispositif d'injection de carburant avec une charge de rechange électrique par laquelle l'unité de commande de moteur est découplée d'un injecteur Diesel,
- indépendamment du signal de commande d'injection, production d'un signal de commande d'injection de Diesel et d'un signal de commande d'injection de gaz ainsi que le début, la longueur et le nombre des injections de Diesel et des injections de gaz par le dispositif à processeur d'un dispositif de commande d'injection, le signal de commande d'injection de Diesel étant modifié par rapport au signal de commande d'injection et le signal de commande d'injection de Diesel produit ainsi que le signal de commande d'injection de gaz produit étant adaptés l'un par rapport à l'autre,
- application du signal de commande d'injection de Diesel à l'injecteur de Diesel, et
- application du signal de commande d'injection de gaz à l'injecteur de gaz,
**caractérisé en ce que**
lorsqu'une régénération de filtre à particules Diesel est identifiée, le moteur Diesel est utilisé dans un fonctionnement Diesel pur, c'est-à-dire qu'aucun signal de commande d'injection de gaz n'est émis et que le signal de commande d'injection de Diesel correspond au signal de commande d'injection.

13. Procédé pour commander un dispositif d'injection de carburant d'un moteur Diesel pour le fonctionnement mixte avec un carburant à base de gaz selon la revendication 12, le signal de commande d'injection de Diesel et le signal de commande d'injection de gaz étant adaptés l'un par rapport à l'autre de telle sorte qu'une puissance nominale prédéfinie et un couple théorique du moteur Diesel ne sont pas dépassés dans le fonctionnement mixte avec du carburant à base de gaz.
